# EUROPÄISCHE PATENTSCHRIFT

(11) **EP 3 232 093 B1**
(45) Veröffentlichungstag und Bekanntmachung des Hinweises auf die Patenterteilung: **08.05.2019**
(21) Anmeldenummer: 17162246.7
(22) Anmeldetag: 22.03.2017
(51) Int. Cl.: F16H 61/04, B60W 10/06, B60W 10/11, B60W 30/19, F16H 63/50, B60W 10/02

(54) **VERFAHREN ZUM MINDERN VON STÖRUNGEN IN EINEM KRAFTFAHRZEUG-ANTRIEBSSTRANG BEI EINEM GANGWECHSEL**
METHOD FOR REDUCING DISTURBANCES IN AN AUTOMOTIVE DRIVE TRAIN IN A GEAR CHANGE
PROCÉDÉ DESTINÉ À RÉDUIRE AU MINIMUM DES PERTURBATIONS DANS UNE CHAÎNE CINÉMATIQUE D'UN VÉHICULE AUTOMOBILE LORS DU CHANGEMENT DE VITESSES

(30) Priorität: 12.04.2016 DE 102016206093
(43) Veröffentlichungstag der Anmeldung: 18.10.2017
(73) Patentinhaber: Ford Global Technologies, LLC, Dearborn, MI 48126 (US)
(72) Erfinder: Ortseifen, Andreas, 52249 Eschweiler (DE); Christen, Urs, 52066 Aachen (DE); Busch, Rainer, 52076 Aachen (DE); Crisp, Nick Dashwood, Benfleet, Essex SS7 2RJ (GB)
(74) Vertreter: Dörfler, Thomas

(56) Entgegenhaltungen:
- US-A1- 2012 109 474
- US-A1- 2014 229 044
- US-B1- 8 733 183

## Beschreibung

Die Erfindung betrifft ein Verfahren zum Mindern von Störungen im Antriebsstrang eines Kraftfahrzeugs bei einem Gangwechsel, gemäß dem Oberbegriff des Patentanspruchs 1.

Um den Komforterwartungen von Kraftfahrzeugkäufern gerecht zu werden, ist ein Ruckeln oder Rucken des Fahrzeugs aufgrund von Torsionsschwingungen im Antriebsstrang zu vermeiden. Derartige Torsionsschwingungen können durch abrupte Drehmomentwechsel z. B. während dynamischem Fahren oder durch Gangwechsel angeregt werden. Durch eine geeignete Steuerstrategie kann eine Dämpfung dieser Schwingungen erreicht werden oder kann die Anregung von resonanten Torsionsschwingungen vermieden werden. Aus Totgang und Nachgiebigkeit des Antriebsstrangs ergeben sich jedoch Schwierigkeiten bei der Auslegung einer derartigen Steuerstrategie.

Der Totgang oder das nachfolgend als "Radialspiel" bezeichnete Spiel des Antriebsstrangs umfasst das Spiel zwischen Zahnrädern und Schaltklauen und anderen Verbindungen im ganzen Antriebsstrang, einschließlich des durch das Pendeln des Motors von einem Lageranschlag zum anderen verursachte Spiels. Während sich der Antriebsstrang durch den Totgang hindurch bewegt, wird kein Drehmoment übertragen. Sobald der Totgang des Antriebsstrangs überquert ist, kann sofort Drehmoment übertragen werden. Diese abrupte Änderung des übertragenen Drehmoments ist ein herausforderndes nichtlineares Systemverhalten, mit dem die Steuerstrategie fertig werden muss.

Die Herausforderung an die Steuerstrategie wird durch die Nachgiebigkeit des Antriebsstrangs noch vergrößert. Der Antriebsstrang wird unter Last elastisch verdreht, und diese elastische Verdrehung muss auf eine kontrollierte Weise gelöst werden, sobald das Fahrpedal losgelassen wird (nachfolgend Gaswegnehmen genannt), damit sich der Antriebsstrang nicht unkontrolliert durch den Totgang hindurch und aufgrund des Motorschleppmoments in umgekehrte Verdrehung hinein bewegt, was zu Ruckeln führen würde. Ähnlich ist bei einem Treten des Fahrpedals (nachfolgend Gasgeben genannt) die Verdrehung auf eine kontrollierte Weise aufzubauen, damit kein Überschwingen in dem durchquerten Relativwinkel auftritt, was ebenfalls zu Ruckeln führen würde.

Die genannte Herausforderung an die Steuerstrategie besteht insbesondere bei Kraftfahrzeugen mit Verbrennungsmotor und einem manuell betätigten Schaltgetriebe und einer konventionellen pedalbetätigten Kupplung oder einer mittels eines Aktuators betätigten automatischen Kupplung. Das Vorhaben des Fahrers, einen anderen Gang zu wählen, d. h., zu schalten, erfordert mehrere Übergänge zwischen verschiedenen Antriebsstrang-Zuständen wie z. B. offenem und geschlossenem Antriebsstrang. Aufgrund des Totgangs und der elastischen Verdrehung des Antriebsstrangs verursacht ein unkontrollierter Übergang von einem Antriebsstrang-Zustand zu einem anderen Ruckbewegungen und Ruckeln des Fahrzeugs in Längsrichtung.

Die DE 10 2007 057 526 A1 offenbart ein Verfahren mit den Merkmalen des Oberbegriffs des Anspruchs 1, nämlich eine Steuerstrategie zum Vermindern von Störungen während eines Gangwechsels bei einem Fahrzeug mit Verbrennungsmotor, Schaltgetriebe und manueller Kupplung, wobei ein Soll-Motordrehzahlwert während eines Gangwechsels auf einen höheren oder niedrigeren Wert als vorher gesetzt wird, nämlich auf einen Wert, der auf einer vorhergesagten Antriebsdrehzahl des Getriebes am Ende des Schaltvorgangs und auf einem Ausgleichsdrehzahlwert basiert, der in Abhängigkeit von der anhand eines Fahrpedalstellungssensors und eines Gangstellungssensors ermittelten Art des Schaltereignisses und der aktuellen Beschleunigung des Fahrzeugs gesetzt wird.

Die US 2012/0109477 A1 offenbart eine Steuerstrategie zum Umgang mit Totgangüberquerung im Antriebsstrang bei einem Doppelkupplungsgetriebe während eines Gasgebens, wobei vor einer Totgangüberquerung ein Soll-Motordrehmoment zum Begrenzen von Antriebsstrang-Verdrehung bestimmt wird; während der Totgangüberquerung ein Soll-Kupplungsvermögen bestimmt wird, mit dem die Kupplung während der Totgangüberquerung eingerückt gehalten wird; nach der Totgangüberquerung das Soll-Motordrehmoment benutzt wird, um das Kupplungsvermögen langsamer als die Antriebsstrang-Verdrehung zu vergrößern; und das Soll-Motordrehmoment und Soll-Auskupplungsgrad zur Erzeugung von Kupplungsschlupf verwendet werden, indem das Motordrehmoment und das Kupplungsvermögen so gesteuert werden, dass das Motordrehmoment das Kupplungsvermögen übersteigt.

Die US 7 300 381 B2 offenbart ein Verfahren zum Steuern des Ausgangsdrehmoments eines Verbrennungsmotors während eines Gangwechsels in einem halbautomatischen Getriebe, das auf mittels Schaltpaddeln gegebene Fahrerbefehle hin elektromechanisch in einen anderen Gang schaltet. Ein Kupplungspedal ist nicht erforderlich, da die Kupplung über einen Aktuator von einer Getriebesteuereinheit betätigt wird. Das Verfahren umfasst, ein vom Fahrer angefordertes Motordrehmoment zu ermitteln, bei Betätigung der Kupplung ein Betätigungssignal an die Motorsteuereinheit zu senden und als Antwort auf das Betätigungssignal und die Motordrehmomentanforderung in der Motorsteuereinheit ein Steuersignal für den Motor zu berechnen, so dass der Motor während des Gangwechsels sein Drehmoment derart ändert, dass es beim Wiedereinkuppeln im Wesentlichen zu dem angeforderten Drehmoment passt.

Die US 6 910 990 B2 offenbart ein Motorsteuersystem, welches das Motordrehmoment steuert, den Totgang von Getriebe und Antriebsstrang zu durchqueren. Die Totgang-Zone wird unter Verwendung von Informationen über das Drehzahlverhältnis im Drehmomentwandler angezeigt, die mit Informationen über die Fahreranforderung und die Fahrzeuggeschwindigkeit ergänzt werden, so dass das Motordrehmoment auf Basis von aktuellen Betriebsbedingungen auf verschiedene vorbestimmte Raten eingestellt wird. Durch entsprechende Drehmomentbegrenzung können Antriebsstrang-Störungen bei Totgang-Überquerung vermindert werden.

Die US 2014/0229044 A1 offenbart ein Hybridfahrzeug, dessen Elektromotor auf einen Schaltbefehl des Fahrers hin auf eine Drehzahl gebracht wird, die auf der Getriebeausgangsdrehzahl und dem Übersetzungsverhältnis nach dem Schalten basiert, wodurch die Drehzahlen über das Getriebe hinweg für das Schalten synchronisiert werden. Der schneller als der Verbrennungsmotor ansprechende Elektromotor ermöglicht es, während eines Gangwechsels auch das bereitgestellte Drehmoment zu steuern.

Aus der US 2012/109474 A1 ist es bei einem Antriebsstrang eines Hybridfahrzeugs bekannt, im Falle eines Lastwechselereignisses einen gewünschten Totwinkelzustand eines Getriebes durch gezielte Drehzahlregelung einzustellen, wobei es sich bei dem Getriebe um ein automatisches Getriebe handelt.

Der Erfindung liegt die Aufgabe zu Grunde, eine Steuerstrategie für Gangwechselvorgänge bereitzustellen, die durch Beeinflussen von Einstellwerten für das Motordrehmoment einen besonders sanften Übergang von einem Antriebsstrang-Zustand zu einem anderen gewährleistet, um den Fahrer während eines Schaltvorgangs zu unterstützen und Fahrzeugruckeln zu vermindern.

Diese Aufgabe wird durch ein Verfahren mit den in Patentanspruch 1 angegebenen Merkmalen gelöst.

Vorteilhafte Weiterbildungen der Erfindung sind in den abhängigen Patentansprüchen angegeben.

Gemäß der Erfindung wird eine Drehmomentsteuerung zum Aufbau bzw. Abbau von Antriebsstrang-Verdrehung durchgeführt, während der Antriebsstrang geschlossen ist, d. h., wenn die Kupplung eingerückt ist, und wenn keine Antriebsstrang-Verdrehung vorhanden ist, werden eine Drehzahlsteuerung zum Synchronisieren der Drehzahlen der Motorabtriebswelle und der Getriebeausgangswelle (bzw. genauer: der auf die Drehzahl am Getriebeeingang anhand des aktuellen Übersetzungsverhältnisses zurückgerechneten Drehzahl der Getriebeausgangswelle) sowie eine Positionssteuerung zum Halten des Antriebsstrangs in einem Totgang-Zustand durchgeführt.

Das Getriebe ist insbesondere ein manuell betätigtes Schaltgetriebe, doch kann es auch ein halbautomatisches Getriebe sein.

In einer Ausführungsform der Erfindung ist die Kupplung eine direktbetätigte Kupplung, also in der Regel eine pedalbetätigte Kupplung.

In einer alternativen Ausführungsform der Erfindung ist die Kupplung eine mittels eines Aktuators betätigte automatische Kupplung, wobei eine durch Betätigung eines Kupplungspedals ausgelöste Anforderung nach einem Öffnen oder Schließen des Antriebsstrangs verzögert wird, bis eine Synchronisation der Drehzahlen der Motorabtriebswelle und der Getriebeeingangswelle erreicht ist. Steht eine derartige elektronische Kupplung zur Verfügung, wird somit auch deren Aus- und Einrücken durch die Steuerstrategie beeinflusst, um Antriebsstrang-Störungen und daher Fahrzeugruckeln noch mehr zu vermindern, nämlich auch dann, wenn der Fahrer schnell schaltet.

Das erfindungsgemäße Verfahren kann mit einer relativ einfachen elektronischen Kupplung durchgeführt werden, d. h., es ist kein besonders komplexes und aufwändiges System zum Betätigen der elektronischen Kupplung erforderlich. Dies liegt daran, dass sich die Steuerstrategie wesentlich auf die drei Steuerfunktionen Drehmomentsteuerung, Drehzahlsteuerung und Positionssteuerung stützt, welche den Antriebsstrang durch Beeinflussung des Motordrehmoments auf ein Ein- oder Ausrücken der Kupplung vorbereiten. Der elektronischen Kupplung wird nur befohlen, in bestimmten Zeitpunkten zu öffnen bzw. zu schließen. Sie muss weder schnell noch genau arbeiten, und ihr Druckpunkt muss nicht exakt bekannt sein. Dies verringert die Anforderungen an die elektronische Kupplung ganz erheblich. Folglich kann eine sehr einfache und kostengünstige elektronische Kupplung verwendet werden.

Gemäß der Erfindung wird die Drehzahlsteuerung vorzugsweise auch dann durchgeführt, während der Antriebsstrang offen ist, und auch dann, während bei offenem Antriebsstrang zwischen Gängen gewechselt wird.

Gemäß der Erfindung werden die Drehzahlsteuerung und ggf. die Positionssteuerung vorzugsweise dazu verwendet, den Antriebsstrang innerhalb eines Totgangs derart zu bewegen, dass sich die Relativdrehzahl von Motorabtriebswelle und Getriebeausgangswelle gegen Ende eines Totgangs langsamer ändert, so dass ein hartes Anprallen am Ende des Totgangs vermieden und Antriebsstrang-Störungen noch mehr vermindert werden.

Zusätzlich können die Drehzahlsteuerung und ggf. die Positionssteuerung auch dazu verwendet werden, das Ende eines Totgangs zu erkennen, durch den sich der Antriebsstrang gerade bewegt, indem ein Zielwert für die Relativdrehzahl auf einen Wert gesetzt wird, mit dem eine definierte Anprall-Signatur in Form einer Drehmomentzunahme zum Aufrechterhalten der Relativdrehzahl entsteht, wobei das Ende des Totgangs anhand der Anprall-Signatur erkannt wird.

Somit synchronisiert die Drehzahlsteuerung die Wellendrehzahlen derart, dass der Antriebsstrang auf ein weitgehend störungsfreies Aus- und Wiedereinrücken der Kupplung vorbereitet wird.

In einer Weiterbildung der Erfindung wird nach einem Ausrücken der Kupplung, aber vor dem Einlegen eines neuen Gangs, der neue Gang auf Basis von voreingestellten Annahmen und/oder verfügbaren Informationen zu Fahrzeugzuständen wie z. B. Fahrzeuggeschwindigkeit, Motordrehzahl und Motordrehmoment und GPS-Daten vorhergesagt, und die Drehzahlen der Motorabtriebswelle und der Getriebeeingangswelle werden auf Basis der Annahmen und/oder Informationen synchronisiert, so dass sie schon synchronisiert sind, wenn der neue Gang eingelegt wird. Falls der Fahrer einen anderen Gang als vorhergesagt einlegt, kann die Drehzahlsteuerung die Drehzahl der Motorabtriebswelle noch korrigieren.

Die Positionssteuerung PC kann anhand einer erkannten Position des Antriebsstrangs am Anfang oder am Ende des Totgangs die Position des Antriebsstrangs in einem späteren Zeitpunkt durch Integrieren der Relativdrehzahl von Motorabtriebswelle und Getriebeeingangswelle berechnen.

Außerdem kann die Positionssteuerung in Abhängigkeit von der berechneten Position die Relativdrehzahl am Ende einer Totgang-Überquerung derart vermindern, dass eine gewünschte Anprall-Signatur erzielt wird.

Es folgt eine Beschreibung von Ausführungsbeispielen anhand der Zeichnungen. Darin zeigen:
- Fig. 1: eine Prinzipskizze eines Kraftfahrzeug-Antriebsstrangs mit Verbrennungsmotor, pedalbetätigter Kupplung und Handschaltgetriebe;
- Fig. 2: eine Prinzipskizze eines Kraftfahrzeug-Antriebsstrangs mit Verbrennungsmotor, elektronisch gesteuerter Kupplung und Handschaltgetriebe;
- Fig. 3: ein vereinfachtes Modell der Verdrehung eines Antriebsstrangs in einem drehmomentfreien Zustand bzw. in einem Drehmoment übertragenden Zustand;
- Fig. 4: ein vereinfachtes Modell des Totgangs eines Antriebsstrangs;
- Fig. 5: ein vereinfachtes Modell des Totgangs und der Verdrehung eines Antriebsstrangs;
- Fig. 6: ein Zustandsdiagramm von Übergängen zwischen Antriebsstrang-Zuständen bei geschlossenem Antriebsstrang;
- Fig. 7: ein Zustandsdiagramm von Übergängen zwischen Antriebsstrang-Zuständen beim Öffnen und Schließen des Antriebsstrangs; und
- Fig. 8: ein der Fig. 7 entsprechendes Zustandsdiagramm mit hinzugefügten Steuerfunktionen.

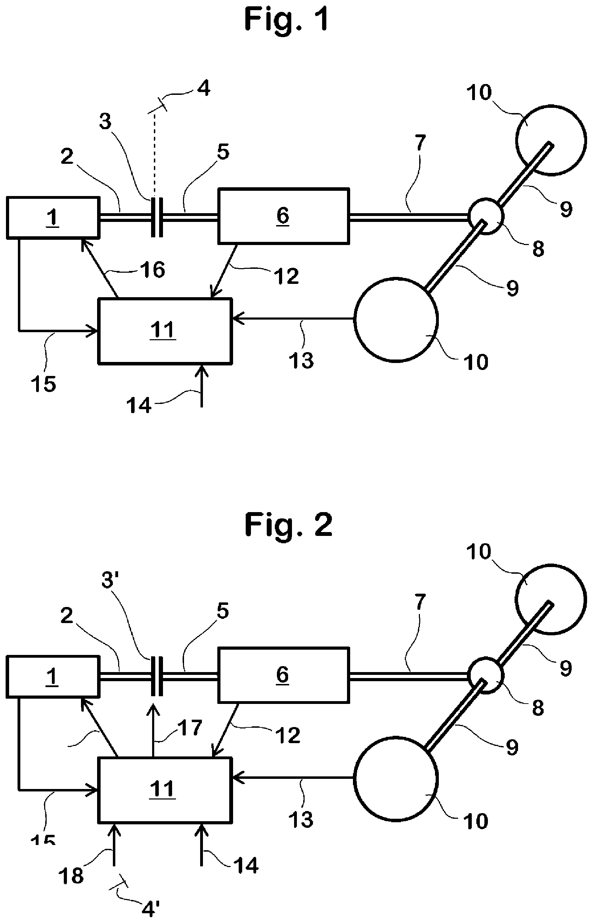

Unter Bezugnahme auf Figuren 1 und 2 werden zunächst zwei Konfigurationen von Kraftfahrzeug-Antriebssträngen beschrieben, bei denen das später beschriebene Verfahren zum Mindern von Ruckeln des Fahrzeugs bei Gangwechseln durchgeführt wird.

In der Konfiguration von Fig. 1 ist ein Verbrennungsmotor 1 über eine Motorabtriebswelle 2 mit einer konventionellen Kupplung 3 gekoppelt, die mit einem Kupplungspedal 4 betätigt wird. Die Kupplung 3 ist abtriebsseitig über eine Getriebeeingangswelle 5 mit einem Handschaltgetriebe 6 verbunden, dessen Getriebeausgangswelle 7 über ein Differential 8 und Radachsen 9 mit zwei angetriebenen Rädern 10 des Kraftfahrzeugs verbunden ist.

Eine elektronische Steuereinheit 11 empfängt mittels geeigneter Sensoren Informationen 12 über den gerade gewählten Gang vom Handschaltgetriebe 6, Informationen 13 über die aktuelle Raddrehzahl mindestens eines der Räder 10, Informationen 14 über die aktuelle Position eines nicht gezeigten Fahrpedals sowie Informationen 15 über die aktuelle Drehzahl des Verbrennungsmotors 1 und erzeugt aus diesen Informationen ein Steuersignal 16 für eine aktuelle Drehmomentanforderung an den Verbrennungsmotor 1.

Die Konfiguration von Fig. 2 unterscheidet sich von jener der Fig. 1 nur dadurch, dass statt der pedalbetätigten Kupplung 3 eine elektronisch gesteuerte Kupplung 3' vorgesehen ist, die mittels eines Aktuators geöffnet und geschlossen wird, und zwar durch ein Steuersignal 17, welches die elektronische Steuereinheit 11 erzeugt, die auch Informationen 18 über die aktuelle Position eines Kupplungspedals 4' empfängt. Somit wird die Funktion der konventionellen Kupplung 3 von der elektronisch gesteuerten Kupplung 3' nachgeahmt. Allerdings kann das Aus- und Einrücken der elektronischen Kupplung 3' für das später beschriebene Verfahren temporär verzögert werden, um das Ruckeln des Fahrzeugs bei Gangwechseln noch mehr zu vermindern.

Zum leichteren Verständnis des weiter unten näher beschriebenen Verfahrens zum Mindern von Ruckeln des Fahrzeugs werden zunächst vereinfachte Zustandsdiagramme und Zustandsübergänge des Antriebsstrangs beschrieben.

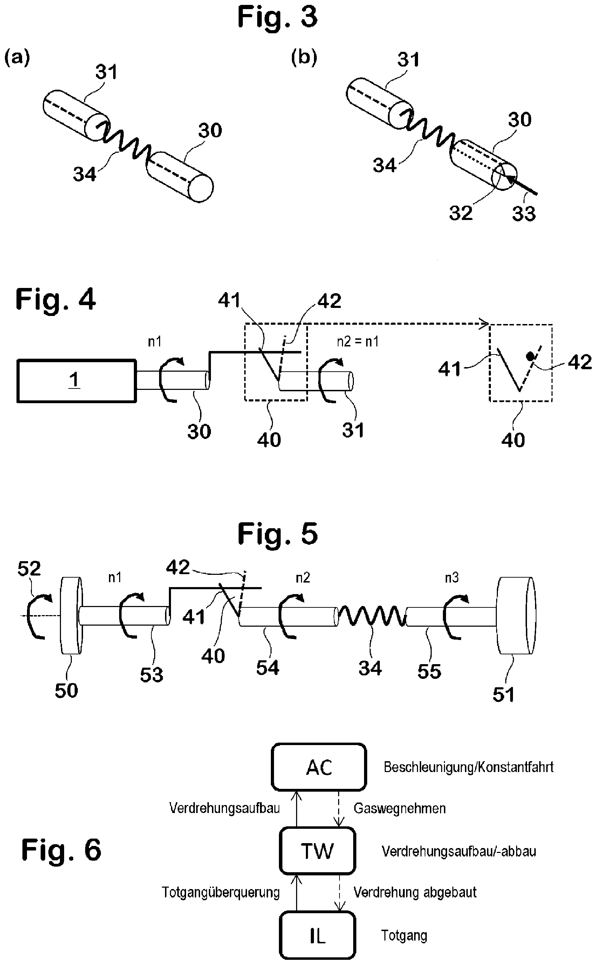

Wie in Fig. 3 gezeigt, erfahren zwei Wellen 30 und 31 eines Antriebsstrangs, welche eine erste und eine letzte Welle des Antriebsstrangs sein können, z. B. die Motorabtriebswelle 2 und eine der Radachsen 9 in Figuren 1 und 2, und die bei (a) in einem drehmomentfreien Zustand gezeigt sind, eine gegenseitige Verdrehung 32, wenn ein Drehmoment 33 z. B. auf die Welle 30 ausgeübt wird, wie bei (b) gezeigt. Diese Verdrehung 32 beruht auf der als eine Feder eingezeichneten elastischen Nachgiebigkeit 34 aller Wellen und sonstigen Komponenten des Antriebsstrangs. Die Verdrehung 32 zeigt sich auch in einer gegenseitigen Winkelverschiebung von in Axialrichtung verlaufenden gestrichelten Linien am Umfang der Wellen 30, 31, welche die jeweiligen Winkelpositionen der Wellen 30, 31 markieren, wobei die punktierte Linie in (b) die Referenzposition in (a) markiert.

Zusätzlich zu der elastischen Nachgiebigkeit 34 gibt es Totgang im Antriebsstrang, der sich aus vielen einzelnen Radialspielen zusammensetzt und in Fig. 4 als ein konzentriertes Totgangmodell veranschaulicht ist, in dem alle Radialspiele zu einem einzigen Totgang 40 zusammengefasst sind, der im ersten Gang z. B. bis zu 60° betragen kann, wobei eine durchgezogene Linie 41 und eine gestrichelte Linie 42 die beiden Enden des Totgangs 40 anzeigen. Wenn sich der Antriebsstrang an einem Ende 41, 42 des Totgangs befindet, kann Drehmoment übertragen werden, und wenn er sich irgendwo dazwischen befindet, wird kein Drehmoment übertragen.

Der Einfachheit halber ist in Figuren 3 bis 5 keine Übersetzungsänderung eingezeichnet, d. h., das Übersetzungsverhältnis ist gleich eins, und die Wellen 30, 31 rotieren unter konstanten Bedingungen mit gleichen Drehzahlen n1 = n2.

Fig. 5 vereint den Totgang 40, die Nachgiebigkeit 34 und die zwei rotierenden Massen 50, 51, die durch das Trägheitsmoment 52 des Verbrennungsmotors 1 und die Trägheit der Räder 10 und des Fahrzeugs selbst gebildet werden, zu einem einfachen Antriebsstrang-Modell mit drei Wellen 53, 54 und 55, die stationär mit gleichen Drehzahlen n1, n2 bzw. n3 rotieren.

Ein Verfahren zum Mindern von Ruckeln des Fahrzeugs, das sanfte Übergänge zwischen Antriebsstrang-Zuständen gewährleistet, wird nun unter Bezugnahme auch auf Figuren 3 bis 5 näher erläutert.

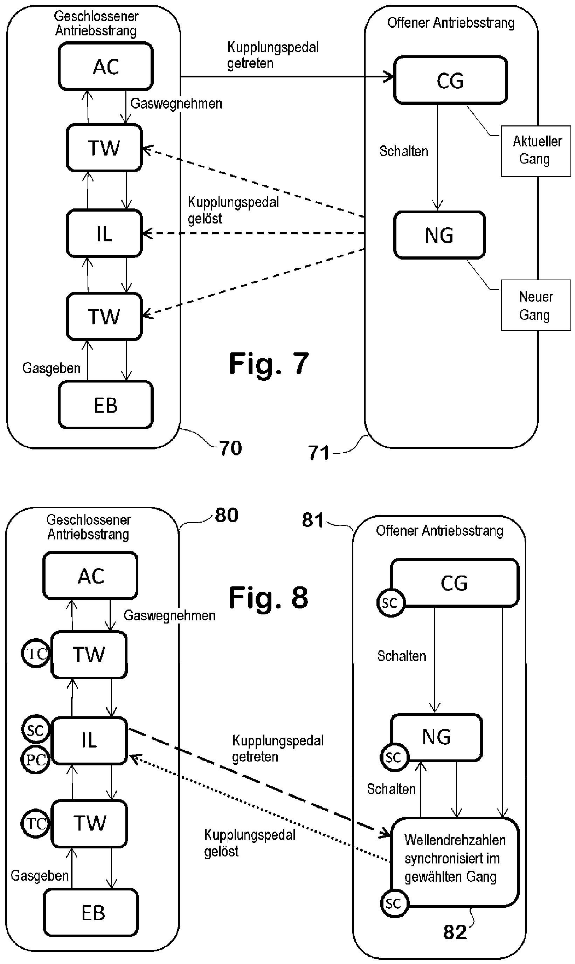

Zunächst werden unter weiterer Bezugnahme auf Fig. 6 und auf die linke Hälfte von Fig. 7 Antriebsstrang-Zustände und Übergänge bei geschlossenem Antriebsstrang betrachtet, d. h., während die Kupplung eingerückt ist.

Bei derartigen Übergängen von einem Antriebsstrang-Zustand zu einem anderen werden mehrere Schritte durchlaufen, wobei sich die Relativwinkel zwischen den drei rotierenden Wellen 53, 54 und 55 in Fig. 5 ändern, wozu mindestens zwei der Wellen vorübergehend unterschiedliche Drehzahlen haben müssen.

In Figuren 6 bis 8 bezeichnet AC (für engl. acceleration) einen Antriebsstrang-Zustand, in dem ein Drehmoment übertragen wird (z. B. beim Beschleunigen oder Fahren mit konstanter Geschwindigkeit, in Fig. 5 an dem mit der gestrichelten Linie 42 angezeigten Ende des Totgangs 40), und IL (für engl. in-lash) bezeichnet einen Totgang-Zustand, in dem kein Drehmoment übertragen wird.

Um von dem Zustand Beschleunigung/Konstantfahrt AC in den Totgang-Zustand IL zu gelangen, in dem kein Drehmoment übertragen wird, sind drei Schritte nötig.

Zuerst muss die Verdrehung 34 des Antriebsstrangs gleich null gemacht werden, indem das Eingangsdrehmoment der Welle 53 in Fig. 5 vermindert wird. Dies wird durch eine Verzögerung der Wellen 53 und 54 in Bezug auf die Welle 55 in Fig. 5 bewirkt.

Danach muss die Drehzahl der Welle 53 kleiner bleiben als die Drehzahl der Welle 54, um die Welle 53 von dem Totgang-Ende 42 weg in den Totgang 40 hinein zu bewegen. In diesem Zustand wird auf die Wellen 54 und 55 kein Drehmoment ausgeübt, so dass sie weiter mit derselben Drehzahl rotieren, wobei die Verdrehung 34 immer noch gleich null ist.

Zuletzt müssen die Relativdrehzahlen zwischen den Wellen 53, 54 und 55 auf null vermindert werden, um in dem Totgang zu bleiben. Das heißt, die Wellen 53, 54 und 55 rotieren mit derselben Drehzahl, wobei die Welle 53 derart positioniert ist, dass sie relativ zur Welle 54 innerhalb des Totgangs 40 liegt, und wobei die Verdrehung 34 zwischen den Wellen 54 und 55 vollständig abgebaut ist.

Fig. 6 veranschaulicht die obige Prozedur in einem Zustandsdiagramm. Beginnend mit dem Zustand Beschleunigung/Konstantfahrt AC löst ein Gaswegnehmen des Fahrers einen Übergang in einen Zustand Verdrehungsaufbau/-abbau TW (für engl. twist) aus. Dies erfolgt automatisch, wobei dem Fahrer die Kontrolle über den Antriebsstrang entzogen ist. Ist die Verdrehung 34 des Antriebsstrangs vollständig abgebaut, wechselt der Antriebsstrang von dem Zustand TW in den Totgang-Zustand IL. Je nach der Relativdrehzahl zwischen den Wellen 53 und 54 bewegt sich der Antriebsstrang weiter durch den Totgang oder - wenn die Relativdrehzahl gleich null ist - behält seine Position in dem Totgang. Diese Zustandsübergänge sind in Fig. 6 mit gestrichelten Pfeilen eingezeichnet.

Wenn der Antriebsstrang von dem Totgang-Zustand IL in den Zustand Beschleunigung/Konstantfahrt AC (das mit der gestrichelten Linie 42 angezeigte Ende des Totgangs 40 in Fig. 5) wechseln soll, muss zuerst der Totgang 40 durchquert werden, indem die Wellen 53 und 54 relativ zueinander rotieren, bis das Ende 42 des Totgangs 40 erreicht ist. Am Ende des Totgangs 40 ist die Relativdrehzahl idealerweise gleich null, um irgendein Anprallen zu vermeiden und ein plötzliches Ausüben von Drehmoment auf die Welle 54 zu verhindern, welches eine Schwingung bzw. eine Antriebsstrang-Störung in der Nachgiebigkeit 34 zwischen den Wellen 53 und 54 anregen würde. Dazu wären aber eine perfekte Kenntnis des Totgang-Winkels und eine perfekte Messung des Totgang-Übergangs nötig. Da dies kaum realisierbar ist, werden in der Praxis eine kleine Relativdrehzahl und ein gewisses Anprallen unvermeidbar sein. Doch obwohl die genaue Position innerhalb des Totgangs und daher das Ende des Totgangs mehr oder weniger unbekannt sind, besonders bei längerem Aufenthalt im Totgang-Zustand IL, kann das Ende des Totgangs anhand der Anprall-Signatur erkannt werden, die in einer Drehmomentzunahme zum Aufrechterhalten der Relativdrehzahl besteht.

Nach der Totgangüberquerung vom Totgang-Zustand IL in den Zustand Verdrehungsaufbau/-abbau TW wird eine Verdrehung 34 aufgebaut, indem das Motordrehmoment rampenförmig erhöht wird, um eine Antriebsstrang-Verdrehung aufzubauen, die dem vom Fahrer angeforderten Drehmoment entspricht. Damit ist der Zustand Beschleunigung/Konstantfahrt AC wieder erreicht, in dem die Kontrolle über den Antriebsstrang wieder an den Fahrer übergeben werden kann. Diese Zustandsübergänge sind in Fig. 6 mit durchgezogenen Pfeilen eingezeichnet.

Das Zustandsdiagramm vom Fig. 6 ist im linken Teil 70 von Fig. 7 zu einem Zustandsdiagramm erweitert, das auch die Übergänge zwischen dem Totgang-Zustand IL und einem Zustand Motorbremsung EB (für engl. engine brake) bei geschlossenem Antriebsstrang veranschaulicht.

Wenn der Antriebsstrang vom Totgang-Zustand IL in den Zustand Motorbremsung EB (das mit der durchgezogenen Linie 41 angezeigte Ende des Totgangs 40 in Fig. 5) wechseln soll, muss zuerst der Totgang 40 durchquert werden, wie oben beschrieben, doch mit umgekehrtem Vorzeichen der Relativdrehzahl. Sobald das Ende 41 des Totgangs 40 erreicht ist, muss das Motordrehmoment rampenförmig vermindert werden, um im Zustand Verdrehungsaufbau TW eine Verdrehung bis zu einem negativen Ziel-Drehmoment aufzubauen, welches häufig das gesamte Schleppmoment des Verbrennungsmotors ist.

Bei einem Gasgeben im Zustand Motorbremsung EB wird im Zustand Verdrehungsabbau TW die Verdrehung des Antriebsstrangs wieder abgebaut, indem das Motordrehmoment rampenförmig erhöht wird. Danach kann der Totgang 40 durch Relativdrehung der Wellen 53 und 54 durchquert werden, und die Relativdrehzahl beider Wellen 53 und 54 muss auf null vermindert werden, um in dem Totgang-Zustand IL zu bleiben.

Der linke Teil 70 von Fig. 7 veranschaulicht mit nach unten gerichteten Pfeilen alle Übergänge vom Zustand AC in Richtung auf den Zustand EB sowie mit nach oben gerichteten Pfeilen alle Übergänge in umgekehrter Richtung, welche im Zustand EB mit einem Gasgeben des Fahrers beginnen. Sämtliche Übergänge innerhalb des Teils 70 finden bei geschlossenem Antriebsstrang statt, d. h., während die Kupplung eingerückt ist.

Als Nächstes wird unter Bezugnahme auf das Zustandsdiagramm von Fig. 7 auch das Öffnen und Schließen des Antriebsstrangs betrachtet.

Dazu wird zunächst davon ausgegangen, dass die Kupplung eine mechanische Kupplung ist, wobei der Fahrer den Antriebsstrang jederzeit und in einem beliebigen Zustand sofort öffnen kann, indem er das Kupplungspedal niedertritt. Dies ist in Fig. 7 durch Hinzufügung eines rechten Teils 71 dargestellt, der Zustände bei offenem Antriebsstrang und die entsprechenden Zustandsübergänge zeigt.

Normalerweise wird der Antriebsstrang geöffnet, um einen neuen Gang zu wählen. Somit enthält der Zustand offener Antriebsstrang 71 zwei weitere Zustände, nämlich aktueller Gang CG und neuer Gang NG, um einen Gangwechsel zu modellieren. Ein Treten des Kupplungspedals löst einen Übergang von irgendeinem Zustand mit geschlossenem Antriebsstrang 70 in den Zustand aktueller Gang CG bei offenem Antriebsstrang 71 aus.

Der Antriebsstrang wird geschlossen, indem das Kupplungspedal gelöst und somit die Kupplung eingerückt wird. Damit kann der Antriebsstrang von einem beliebigen geöffneten Zustand (Teil 71 in Fig. 7) in einen geschlossenen Zustand (Teil 70 in Fig. 7) übergehen, wie in Fig. 7 mit gestrichelten Pfeilen angezeigt. Der Endzustand (TW oder IL) hängt davon ab, wie der Fahrer das Kupplungspedal betätigt, sowie von der Drehzahldifferenz zwischen Motorabtriebswelle 2 und Getriebeeingangswelle 5, d. h., deren Relativdrehzahl.

Wenn die Relativdrehzahl der Wellen gleich null ist und die Kupplung eingerückt wird, geht der Antriebsstrang in den Totgang-Zustand IL über. Wenn es eine Drehzahldifferenz gibt, bewirkt das Einrücken der Kupplung, dass sich der Antriebsstrang durch den Totgang bewegt und - sobald das Ende des Totgangs erreicht ist - Verdrehung aufbaut. In diesem Fall ist der Endzustand der Zustand Verdrehungsaufbau/- abbau TW.

Es folgt eine detaillierte Beschreibung der Steuerstrategie eines Verfahrens zum Mindern von Ruckeln des Fahrzeugs bei Gangwechseln. Dazu wird das Verhalten bei geschlossenem Antriebsstrang verbessert, indem die einzelnen Antriebsstrang-Zustände und die Übergänge dazwischen kontrolliert gesteuert werden, um sanfte Übergänge zwischen Zuständen mit offenem und geschlossenem Antriebsstrang zu gewährleisten.

Für die Steuerstrategie müssen drei verschiedene Steuerfunktionen in bestimmten Antriebsstrang-Zuständen aktiviert werden, um das Antriebsstrang-Verhalten zu verbessern. Diese drei Steuerfunktionen werden nachfolgend beschrieben.

### 1. Gesteuertes Abbauen und Aufbauen von Antriebsstrang-Verdrehung

Ein gesteuertes Abbauen und Aufbauen von Antriebsstrang-Verdrehung wird erreicht, indem die an die Motorsteuerung gesendeten Drehmoment-Einstellwerte behutsam angepasst werden. Das heißt, es ist eine Drehmomentsteuerung TC (für engl. torque control) aktiv. Immer wenn die Antriebsstrang-Verdrehung aufgebaut oder abgebaut werden muss, d. h., in den Zuständen TW von Fig. 7, wird der Drehmoment-Einstellwert rampenförmig von dem aktuellen Wert auf den Zielwert gebracht. Der Zielwert hängt von dem betrachteten Übergang ab. Ändern der Steigung der Rampe kann benutzt werden, um einen Kompromiss zwischen Sanftheit und Dauer des Übergangs zu erzielen. Verfahren zum Handhaben derartiger Übergänge sind bekannt, z. B. aus S. De La Salle, M. Jansz, D. Light; Design of a Feedback Control System for Damping Vehicle Shuffle; Proceedings of the EAEC European Automotive Congress, Barcelona, Spanien, 1999.

### 2. Steuerung der Relativdrehzahl von Wellen im Totgang

Eine Steuerung der Relativdrehzahl von Wellen im Totgang wird durch eine Drehzahlsteuerung SC (für eng. speed control) im geschlossenem Regelkreis erreicht. Der Antriebsstrang bewegt sich in dem oder durch den Totgang, wenn es eine Differenz zwischen der Motordrehzahl, d. h. der Drehzahl der Motorabtriebswelle 2 des Verbrennungsmotors 1, und der Drehzahl der Getriebeausgangswelle 7(unter Berücksichtigung des aktuellen Übersetzungsverhältnisses) gibt, d. h., eine Relativdrehzahl zwischen den Wellen 53 und 54 in Fig. 5. Diese Relativdrehzahl kann geregelt werden, wenn die Drehzahlen beider Wellen gemessen werden können oder wenn ein zuverlässiger Schätzwert auf Basis von Messungen zur Verfügung steht. Die Motordrehzahl kann direkt gemessen werden, und ein Schätzwert für die Drehzahl der Getriebeausgangswelle 7 kann wie folgt berechnet werden:
Man berechne die Drehzahl der Getriebeausgangswelle 7 unter Verwendung einer Raddrehzahlmessung und rechne diese Drehzahl auf die Getriebeeingangswelle 5 hoch, z. B. unter Verwendung von Informationen über den gewählten Gang, damit die Drehzahlen vergleichbar werden. Danach kann die Relativdrehzahl beeinflusst werden, indem der Drehmoment-Einstellwert der Motorsteuerung geändert wird und somit die Drehzahl der Motorabtriebswelle 2 vergrößert oder verkleinert wird. Mittels Drehzahlsteuerung ist es auch möglich, in dem Totgang zu bleiben, indem die Wellendrehzahlen gleich gehalten werden, d. h., die Relativdrehzahl auf null gehalten wird.

Es sei angemerkt, dass es Betriebsarten gibt, in denen es nicht möglich ist, eine Drehzahldifferenz von null aufrechtzuerhalten, nämlich wegen Beschränkungen des verfügbaren Motordrehmoments oder der Änderungsgeschwindigkeit des Motordrehmoments.

### 3. Positionssteuerung im Totgang

Ist die Anfangsposition des Antriebsstrangs im Totgang oder am Ende des Totgangs bekannt, kann die Position in künftigen Zeitpunkten durch Integrieren der Relativdrehzahl berechnet werden. Dies liefert eine Positionsschätzung, die verwendet werden kann, um einen Regelkreis für Positionssteuerung PC (für engl. position control) zu verwirklichen. Die Positionssteuerung wird verwendet, um den Antriebsstrang ungeachtet von auf den Antriebsstrang wirkenden Störungen im Totgang zu halten. Sie kann außerdem dazu verwendet werden, die Totgangüberquerung zu verbessern, da die Relativdrehzahl in Abhängigkeit von der aktuellen Position angepasst werden kann. Daher ist es möglich, die Relativdrehzahl am Ende des Totgangs zu vermindern und die gewünschte Anprall-Signatur zu erzielen.

Fig. 8 zeigt ein der Fig. 7 entsprechendes Zustandsdiagramm, dem die Steuerfunktionen Drehmomentsteuerung TC, Drehzahlsteuerung SC und Positionssteuerung PC hinzugefügt sind.

Fig. 8 zeigt in ihrem linken Teil 80, wie die vorstehend beschriebenen Steuerfunktionen verwendet werden, um die Zustände und Zustandsübergänge bei geschlossenem Antriebsstrang zu steuern. Zum Beispiel, wenn im Zustand TW eine Verdrehung aufzubauen oder abzubauen ist, wird die Drehmomentsteuerung TC verwendet. Um im Totgang-Zustand IL die Antriebsstrang-Position und die Drehzahl zu steuern, kann die Positionssteuerung PC und/oder die Drehzahlsteuerung SC verwendet werden. Man beachte, dass es eventuell nicht möglich ist, die Steuerfunktionen TC, SC, PC immer zu verwenden. In Anhängigkeit von bestimmten Bedingungen oder Betriebsarten müssen einzelne Steuerfunktionen möglicherweise deaktiviert werden.

Fig. 8 zeigt weiterhin in ihrem rechten Teil 81, dass die Drehzahlsteuerung SC der Relativdrehzahl von Wellen im Totgang aktiviert wird, wenn der Antriebsstrang offen ist. Das Ziel ist es, die Drehzahlen der Motorabtriebswelle 2 und Getriebeeingangswelle 5 (in etwa äquivalent zu den Wellen 53 und 54 in Fig. 5) zu synchronisieren, d. h., eine Relativdrehzahl von null herzustellen, und zwar sowohl in dem aktuellen Gang als auch in dem neuen Gang. Ist Synchronisation hergestellt, geht der offene Antriebsstrang in einen neuen Zustand 82 mit in dem gewählten Gang synchronisierten Wellendrehzahlen über. Etwas Ähnliches ist in der gattungsbildenden DE 10 2007 057 526 A1 beschrieben, um die Drehzahlfehlanpassung zu minimieren, wenn der Antriebsstrang wieder geschlossen wird.

Zusammengefasst veranschaulicht Fig. 8, wie nach einem Gaswegnehmen die Steuerstrategie den Antriebsstrang schnell in den Totgang bewegt. Danach öffnet der Fahrer den Antriebsstrang, indem er auf das Kupplungspedal tritt (gestrichelter Pfeil), und danach wählt er einen neuen Gang. Da ein Sensor Informationen über den neuen Gang an die Drehzahlsteuerung SC sendet, können die Motorabtriebswelle 2 und die Getriebeeingangswelle 5 schnell wieder synchronisiert werden, bevor der Fahrer das Kupplungspedal wieder löst (punktierter Pfeil in Fig. 8). Schließlich bringt die Steuerstrategie den Antriebsstrang wieder zurück in den Zustand AC.

Es folgen nähere Erläuterungen der oben beschriebenen Steuerstrategie anhand der beiden Fälle, dass der Antriebsstrang wie in Fig. 1 oder wie in Fig. 2 gestaltet ist.

### Fall 1: Langsames Gangschalten mit konventioneller Kupplung

In diesem Fall sei der Anfangszustand des Antriebsstrangs der Zustand Beschleunigung/Konstantfahrt AC. Der Fahrer beabsichtigt zu schalten und zu beschleunigen oder mit konstanter Geschwindigkeit weiterzufahren, so dass der Endzustand ebenfalls der Zustand AC ist. Der Antriebsstrang ist mit einer konventionellen pedalbetätigten Kupplung und einem Gangsensor ausgestattet, der ein Signal liefert, das den gerade gewählten Gang anzeigt. Außerdem wird vorausgesetzt, dass die Steuerfunktionen TC, SC, PC relativ schnell arbeiten verglichen mit den Zeiten, mit denen der Fahrer die einzelnen Schritte des Schaltvorgangs durchführt.

Unter Bezugnahme auf Fig. 8 besteht der Gangschaltvorgang aus den folgenden Schritten:
i. Der Fahrer geht vom Fahrpedal (Gaswegnehmen), und der Antriebsstrang wechselt vom Zustand Beschleunigung/Konstantfahrt AC in den Zustand Verdrehungsabbau TW, in dem die Drehmomentsteuerung TC die Antriebsstrang-Verdrehung schnell abbaut.
ii. Die Drehzahlsteuerung SC übernimmt dann und bewegt den im Totgang IL befindlichen Antriebsstrang derart, dass eine Relativdrehzahl zwischen der Motorabtriebswelle 2 und der Getriebeausgangswelle (zurückgerechnet mit dem aktuellen Übersetzungsverhältnis auf die Getriebeeingangswelle) 7 (Wellen 53 und 54 in Fig. 5) auftritt, bis sich der Antriebsstrang genügend weit im Totgang befindet, d. h., bis ein ausreichender Totgang-Winkel erreicht worden ist. Sobald sich der Antriebsstrang weit genug im Totgang befindet, halten Drehzahlsteuerung SC und Positionssteuerung PC den Antriebsstrang im Totgang. Wie oben erwähnt, erfordert dies eine Relativdrehzahl null zwischen den Wellen 53 und 54 in Fig. 5.
iii. Der Fahrer tritt das Kupplungspedal und öffnet den Antriebsstrang. In dem Zustandsdiagramm wechselt der Antriebsstrang in den Zustand "Wellendrehzahlen synchronisiert im gewählten Gang" 82.
iv. (a) Der Fahrer bewegt den Ganghebel von dem alten Gang in Richtung auf die Leerlaufstellung. Die Drehzahlsteuerung SC beginnt, die Drehzahl der Motorabtriebswelle 2 in Abhängigkeit von dem neuen Gang mit der geschätzten künftigen Drehzahl der Getriebeeingangswelle 5 zu synchronisieren. Eine Schätzung oder Vorhersage des neuen Gangs kann auf einfachen Annahmen basieren, wie z. B. immer ein Gang über dem alten Gang, oder auf komplexeren Algorithmen, die mehr Informationen wie z. B. die Fahrzeuggeschwindigkeit, Motordrehzahl und -drehmoment und GPS-Daten berücksichtigen.
iv. (b) Der Fahrer bewegt den Ganghebel aus der Leerlaufstellung in Richtung auf den gewünschten neuen Gang. Ein Sensor für den gewählten Gang liefert Informationen über den gewünschten neuen Gang und führt sie der Drehzahlsteuerung SC zu. Wenn der neue Gang mit dem erwarteten Gang übereinstimmt, sind die Wellendrehzahlen schon synchronisiert. Andernfalls synchronisiert die Drehzahlsteuerung SC die Wellendrehzahlen.
iv. (c) Der Fahrer löst das Kupplungspedal bzw. gibt es frei. Da die Wellendrehzahlen synchronisiert sind, wechselt der Antriebsstrang zurück in den Totgang-Zustand IL.
v. Ein Gasgeben führt zu einer kontrollierten Bewegung des Antriebsstrangs zu dem entsprechenden Totgang-Ende (wobei die Drehzahlsteuerung SC aktiv ist und nach einer Aufprall-Signatur sucht, um das Ende des Totgangs zu erkennen), einem kontrollierten Aufbau von Verdrehung unter der Drehmomentsteuerung TC und schließlich dem Übergang in den Zustand Beschleunigung/Konstantfahrt AC, in dem die Kontrolle wieder an den Fahrer übergeben wird.

Man beachte, dass die obigen Annahmen beinhalten, dass der Totgang-Zustand IL erreicht wird, bevor das Kupplungspedal getreten wird, und dass der Zustand "Wellendrehzahlen synchronisiert im gewählten Gang" 82 immer erreicht werden kann, bevor das Kupplungspedal gelöst wird.

Das oben beschriebene Verfahren hat die Vorteile, dass Antriebsstrang-Störungen vermieden werden, da Übergänge zwischen Zuständen mit geschlossenem Antriebsstrang kontrolliert werden und da ein Übergang in einen Zustand mit offenem Antriebsstrang erwartungsgemäß stattfindet, wenn sich der Antriebsstrang im Totgang befindet und die Wellendrehzahlen synchronisiert sind. Daher wird keine Antriebsstrang-Störung erzeugt, während die Kupplung ausgerückt ist. Analog findet ein Einrücken der Kupplung erwartungsgemäß statt, nachdem die Wellendrehzahlen synchronisiert worden sind. Auch hierbei werden Antriebsstrang-Störungen vermieden und wird somit ein Ruckeln des Fahrzeugs vermieden.

Man beachte jedoch, dass bei schnellen Schaltvorgängen die Steuerfunktionen TC, SC und PC möglicherweise ebenso schnell wie oder sogar langsamer als der Fahrer sind, in welchem Fall die Steuerstrategie nicht ihr ganzes Potential zeigt. Der Grund dafür ist, dass der Fahrer die volle Herrschaft über das Ein- und Auskuppeln hat. Daher kann der Fahrer jederzeit Übergänge von dem und in den Zustand mit offenem Antriebsstrang auslösen, auch zwischen den Zuständen TW und CG oder NG, ohne abzuwarten, bis Synchronisation der Wellendrehzahlen hergestellt ist. Diese Nachteile können mittels einer Kupplung, die durch einen elektronisch gesteuerten Aktuator betätigt wird, und deren Einbeziehung in die Steuerstrategie vermieden werden, wie es nachfolgend beschrieben wird.

### Fall 2: Gangschalten mit elektronischer Kupplung

Ist der Antriebsstrang mit einer elektronisch gesteuerten Kupplung 3' wie in Fig. 2 ausgestattet, können im Falle von schnellem Gangschalten Verbesserungen erzielt werden, insbesondere immer dann, wenn die Steuerfunktionen TC, SC und PC ebenso schnell oder sogar langsamer sind als der Fahrer, wenn er die einzelnen Schritte eines Schaltvorgangs durchführt.

Zunächst wird ein Wiedereinrücken der Kupplung 3' aus den Zuständen CG oder NG betrachtet. Wie im Fall 1 beschrieben, ist ein Wiedereinrücken der Kupplung 3' mit synchronisierten Wellendrehzahlen dahingehend vorteilhaft, als Antriebsstrang-Störungen vermieden werden. Mit einer elektronischen Kupplung 3' kann dies auch dann erreicht werden, wenn der Fahrer das Kupplungspedal 4' im Zustand CG oder NG löst, obwohl noch keine Synchronisation hergestellt ist. Zu diesem Zweck wird die durch ein Lösen des Kupplungspedals 4' ausgelöste Anforderung nach einem Wiedereinrücken der Kupplung 3' vorübergehend verzögert. Die gewonnene Zeit kann genutzt werden, um die Wellendrehzahlen zu synchronisieren, bevor der Befehl zum Schließen der Kupplung 3' von der elektronischen Steuereinheit 11 an die Kupplung 3' gesendet wird.

Als Nächstes wird das Ausrücken der Kupplung 3' aus dem Zustand TW betrachtet. Auch hierbei ist es möglich, durch Verzögern des Kupplungsbetriebs ein sanfteres Ausrücken der Kupplung 3' zu erreichen, indem eine in einem Zustand TW erfolgende Anforderung nach einem Ausrücken der elektronischen Kupplung 3' vorübergehend verzögert wird. Die gewonnene Zeit kann genutzt werden, um den Antriebsstrang in den Totgang-Zustand IL zu bringen und die Wellendrehzahlen zu synchronisieren, d. h., eine Relativdrehzahl von null herzustellen. Danach sendet die Steuerstrategie einen Befehl zum Öffnen der Kupplung 3' von der elektronischen Steuereinheit 11 an die Kupplung 3', was den Übergang in den Zustand offener Antriebsstrang 81 in Fig. 8 auslöst. Da die Drehzahlen der Motorabtriebswelle 2 und der Getriebeeingangswelle 5 bei dem Übergang gleich sind, werden keine Störungen erzeugt.

Man beachte, dass das Öffnen des Antriebsstrangs das Antriebsdrehmoment wegnimmt, so dass der Rest des Antriebsstrangs eine etwa vorhandene Verdrehung aufgrund von Nachgiebigkeit lösen muss. Der Vorgang, das Antriebsdrehmoment wegzunehmen, kann mit einer mechanischen Kupplung nicht leicht gesteuert werden, doch mit einer elektronischen Kupplung 3' kann ein gewisser Grad von Drehmomentsteuerung durchgeführt werden, bevor der Antriebsstrang vollständig gelöst wird.

Zusammengefasst kann die Steuerstrategie zum Vermindern von Ruckeln mittels einer elektronischen Kupplung unabhängig davon durchgeführt werden, wie schnell oder wie langsam der Fahrer schaltet.

Außerdem kann die Steuerstrategie mit einer relativ einfachen elektronischen Kupplung durchgeführt werden, d. h., es ist kein besonders komplexes und aufwändiges System zum Betätigen der elektronischen Kupplung erforderlich. Dies liegt daran, dass sich die Steuerstrategie wesentlich auf die Steuerfunktionen TC, SC und PC stützt, welche den Antriebsstrang durch Beeinflussung des Motordrehmoments auf ein Ein- oder Ausrücken der Kupplung vorbereiten. Der elektronischen Kupplung wird nur befohlen, in bestimmten Zeitpunkten zu öffnen bzw. zu schließen. Sie muss weder schnell noch genau arbeiten, und ihr Druckpunkt muss nicht exakt bekannt sein. Dies verringert die Anforderungen an die elektronische Kupplung ganz erheblich. Folglich kann eine sehr einfache und kostengünstige elektronische Kupplung verwendet werden.

Sowohl mit einer mechanischen als auch mit einer elektronischen Kupplung minimiert die beschriebene Steuerstrategie Fahrzeugruckeln während eines Schaltvorgangs durch sorgfältige Steuerung von Übergängen zwischen Antriebsstrang-Zuständen und sorgfältige Steuerung des Antriebsstrang-Verhaltens innerhalb von Antriebsstrang-Zuständen. Daher trägt die Steuerstrategie dazu bei, das Fahrvergnügen zu erhöhen.

Die beschriebene Steuerstrategie kann auch dazu verwendet werden, Antriebsstränge mit halbautomatischen Getrieben zu steuern. Derartige Getriebe wechseln die Gänge nicht automatisch, doch führen sie die Gangschaltvorgänge durch, wenn der Fahrer einen Ganghebel bewegt. Ein Kupplungspedal ist nicht erforderlich, da die Kupplung automatisch geöffnet und geschlossen wird.

## Patentansprüche

1. Verfahren zum Mindern von Störungen im Antriebsstrang eines Kraftfahrzeugs mit Verbrennungsmotor (1) und einer zwischen einer Motorabtriebswelle (2) und einer Getriebeeingangswelle (5) angeordneten Kupplung (3, 3') bei einem Gangwechsel von einem aktuellen Gang zu einem neuen Gang, wobei ein Sollwert für die Drehzahl des Verbrennungsmotors (1) während eines Gangwechsels auf einen Wert gesetzt wird, der auf einer vorhergesagten Antriebsdrehzahl eines Getriebes (6) am Ende des Schaltvorgangs basiert,
**dadurch gekennzeichnet, dass**
nach einem Gaswegnehmen durch einen Fahrer vor dem Gangwechsel und während der Antriebsstrang noch geschlossen ist, eine Drehmomentsteuerung (TC) zum Aufbau bzw. Abbau von Antriebsstrang-Verdrehung (32) und, wenn keine Antriebsstrang-Verdrehung (32) vorhanden ist, eine Drehzahlsteuerung (SC) zum Synchronisieren der Drehzahl der Motorabtriebswelle (2) und der auf den Getriebeeingang entsprechend dem Übersetzungsverhältnis des aktuellen Gangs zurückgerechneten Drehzahl der Getriebeausgangswelle (7) sowie eine Positionssteuerung (PC) zum Halten des Antriebsstrangs in einem Totgang-Zustand (IL) durchgeführt werden.

2. Verfahren nach Anspruch 1,
**dadurch gekennzeichnet, dass**
das Getriebe (6) ein manuell betätigtes Schaltgetriebe ist.

3. Verfahren nach Anspruch 1 oder 2,
**dadurch gekennzeichnet, dass**
die Kupplung eine direktbetätigte Kupplung (3) ist.

4. Verfahren nach Anspruch 1 oder 2,
**dadurch gekennzeichnet, dass**
die Kupplung eine mittels eines Aktuators betätigte automatische Kupplung (3') ist, wobei eine durch Betätigung eines Kupplungspedals (4') ausgelöste Anforderung nach einem Öffnen oder Schließen des Antriebsstrangs verzögert wird, bis eine Synchronisation der Drehzahlen der Motorabtriebswelle (2) und der Getriebeeingangswelle (5) erreicht ist.

5. Verfahren nach Anspruch 4,
**dadurch gekennzeichnet, dass**
die Drehzahlsteuerung (SC) auch dann durchgeführt wird, während der Antriebsstrang offen ist, und auch dann, während bei offenem Antriebsstrang zwischen Gängen (CG, NG) gewechselt wird (82).

6. Verfahren nach einem der vorhergehenden Ansprüche,
**dadurch gekennzeichnet, dass**
die Drehzahlsteuerung (SC) dazu verwendet wird, den Antriebsstrang innerhalb eines Totgangs derart zu bewegen, dass sich die Relativdrehzahl von Motorabtriebswelle (2) und der auf den Getriebeeingang zurückgerechneten Drehzahl der Getriebeausgangswelle (7) gegen Ende eines Totgangs langsamer ändert.

7. Verfahren nach Anspruch 6,
**dadurch gekennzeichnet, dass**
die Drehzahlsteuerung (SC) dazu verwendet wird, das Ende eines Totgangs zu erkennen, durch den sich der Antriebsstrang gerade bewegt, indem ein Zielwert für die Relativdrehzahl auf einen Wert gesetzt wird, mit dem eine definierte Anprall-Signatur in Form einer Drehmomentzunahme zum Aufrechterhalten der Relativdrehzahl entsteht, wobei das Ende des Totgangs anhand der Anprall-Signatur erkannt wird.

8. Verfahren nach einem der vorhergehenden Ansprüche,
**dadurch gekennzeichnet, dass**
nach einem Ausrücken der Kupplung, aber vor dem Einlegen eines neuen Gangs, der neue Gang auf Basis von voreingestellten Annahmen und/oder verfügbaren Informationen zu Fahrzeugzuständen vorhergesagt wird und dass die Drehzahlen der Motorabtriebswelle und der auf den Getriebeeingang zurückgerechneten Drehzahl der Getriebeausgangswelle auf Basis der Annahmen und/oder Informationen synchronisiert werden.

9. Verfahren nach einem der vorhergehenden Ansprüche,
**dadurch gekennzeichnet, dass**
die Positionssteuerung PC anhand einer erkannten Position des Antriebsstrangs am Anfang oder am Ende des Totgangs die Position des Antriebsstrangs in einem späteren Zeitpunkt durch Integrieren der Relativdrehzahl von Motorabtriebswelle (2) und Getriebeausgangswelle (7) berechnet.

10. Verfahren nach Anspruch 9,
**dadurch gekennzeichnet, dass**
die Positionssteuerung PC in Abhängigkeit von der berechneten Position die Relativdrehzahl am Ende einer Totgang-Überquerung derart vermindert, dass eine gewünschte Anprall-Signatur erzielt wird.

## Claims

1. Method for reducing disturbances in the drivetrain of a motor vehicle having an internal combustion engine (1) and a clutch (3, 3'), which is arranged between an engine output shaft (2) and a transmission input shaft (5), in the event of a change of gear speed from a current gear speed to a new gear speed, wherein a setpoint value for the rotational speed of the internal combustion engine (1) during a change of gear speed is set to a value which is based on a predicted drive rotational speed of a transmission (6) at the end of the shift process,
**characterized in that**
after a driver releases the acceleration before the change of gear speed and while the drivetrain is still closed, a torque control (TC) process is carried out for increasing or reducing the rotation (32) of the drivetrain, and if no rotation (32) of the drivetrain is present, a rotational speed control (SC) process for synchronizing the rotational speed of the engine output shaft (2) and the rotational speed of the transmission output shaft (7) which is calculated back to the transmission input in accordance with the transmission ratio of the current gear speed is carried out, and a position control (PC) process for keeping the drivetrain in a free travel state (IL) is carried out.

2. Method according to Claim 1,
**characterized in that**
the transmission (6) is a manually activated transmission.

3. Method according to Claim 1 or 2,
**characterized in that**
the clutch is a directly activated clutch (3).

4. Method according to Claim 1 or 2,
**characterized in that**
the clutch is an automatic clutch (3') which is activated by means of an actuator, wherein a request, triggered by activation of a clutch pedal (4'), for opening or closing of the drivetrain is delayed until synchronization of the rotational speeds of the engine output shaft (2) and of the transmission input shaft (5) is achieved.

5. Method according to Claim 4,
**characterized in that**
the rotational speed controll (SC) process is carried out even while the drivetrain is open, and even while shifting (82) is being performed between gear speeds (CG, NG) with an open drivetrain.

6. Method according to one of the preceding claims,
**characterized in that**
the rotational speed control (SC) process is used to move the drivetrain within free travel in such a way that the relative rotational speed of engine output shaft (2) and the rotational speed of the transmission output shaft (7), which is calculated back to the transmission input, changes more slowly towards the end of free travel.

7. Method according to Claim 6,
**characterized in that**
the rotational speed control (SC) process is used to detect the end of free travel, as a result of which the drivetrain just moves **in that** a target value is set for the relative rotational speed to a value with which a defined impact signature in the form of an increase in torque for maintaining the relative rotational speed occurs, wherein the end of the free travel is detected on the basis of the impact signature.

8. Method according to one of the preceding claims,
**characterized in that**
after the clutch disengages, but before a new gear speed is engaged, the near gear speed is predicted on the basis of preset assumptions and/or available information relating to vehicle states, and **in that** the rotational speeds of the engine output shaft and of the rotational speed of the transmission output shaft, which is calculated back to the transmission input, are synchronized on the basis of the assumptions and/or information.

9. Method according to one of the preceding claims,
**characterized in that**
the position control PC process calculates, on the basis of a detected position of the drivetrain at the start or at the end of the free travel, the position of the drivetrain at a later time by integrating the relative rotational speed of the engine output shaft (2) and of the transmission input shaft (7).

10. Method according to Claim 9,
**characterized in that**
the position control PC process is reduced as a function of the calculated position of the relative rotational speed at the end of a free travel crossover in such a way that a desired impact signature is achieved.

## Revendications

1. Procédé de réduction des perturbations dans le train d'entraînement d'un véhicule automobile doté d'un moteur (1) à combustion interne et d'un embrayage (3, 3') disposé entre un arbre de sortie (2) du moteur et un arbre d'entrée (5) de la transmission lors d'un changement de rapport de transmission depuis un rapport de transmission en cours à un nouveau rapport de transmission, dans lequel une valeur de consigne de la vitesse de rotation du moteur (1) à combustion interne pendant un changement de rapport de transmission est fixée à une valeur basée sur une vitesse de rotation prédite pour l'entraînement de la transmission (6) à la fin de l'opération de changement de rapport de transmission,
**caractérisé en ce que**
après la réduction des gaz par le conducteur avant le changement de rapport de transmission et pendant que le train d'entraînement est encore fermé, une commande (TC) du couple de rotation est exécutée pour établir ou supprimer une torsion (32) du train d'entraînement et, s'il n'y a pas de torsion (32) du train d'entraînement, une commande (SC) de la vitesse de rotation est exécutée pour synchroniser la vitesse de rotation de l'arbre de sortie (2) du moteur par rapport à la vitesse de rotation de l'arbre de sortie (7) de la transmission diminuée à l'entrée de la transmission en correspondance au rapport de conversion du rapport de transmission en cours et une commande de position (PC) est exécutée pour maintenir le train d'entraînement dans une situation (IL) de passage au point mort.

2. Procédé selon la revendication 1, **caractérisé en ce que** la transmission (6) est une transmission à commande manuelle du changement de rapport de transmission.

3. Procédé selon les revendications 1 ou 2, **caractérisé en ce que** l'embrayage est un embrayage (3) à actionnement direct.

4. Procédé selon les revendications 1 ou 2, **caractérisé en ce que** l'embrayage est un embrayage automatique (3') actionné par un actionneur, dans lequel une demande déclenchée par l'actionnement de la pédale d'embrayage (4') est retardée après l'ouverture ou la fermeture du train d'entraînement jusqu'à ce que soit atteinte une synchronisation des vitesses de rotation de l'arbre de sortie (2) du moteur et de l'arbre d'entrée (5) de la transmission.

5. Procédé selon la revendication 4, **caractérisé en ce que** la commande (SC) de la vitesse de rotation est également exécutée lorsque le train d'entraînement est ouvert et lors d'un changement (82) de rapport de transmission entre les rapports de transmission (CG, NG) avec le train d'entraînement ouvert.

6. Procédé selon l'une des revendications précédentes, **caractérisé en ce que** la commande (SC) de la vitesse de rotation est utilisée pour déplacer le train d'entraînement dans un passage au point mort de telle sorte que la vitesse de rotation relative d'arbre de sortie (2) du moteur et la vitesse de rotation de l'arbre de sortie (7) de la transmission ramenée à l'entrée de la transmission se modifie plus lentement vers la fin d'un passage au passage au point mort.

7. Procédé selon la revendication 6, **caractérisé en ce que** la commande (SC) de la vitesse de rotation est utilisée pour détecter la fin d'un passage au point mort dans lequel le train d'entraînement vient de se placer en fixant pour la vitesse de rotation relative une valeur cible à laquelle s'établit une signature définie du choc sous la forme d'une augmentation du couple de rotation en vue de maintenir la vitesse de rotation relative, la fin du passage au point mort étant identifiée à l'aide de la signature du choc.

8. Procédé selon l'une des revendications précédentes, **caractérisé en ce que** après un débrayage mais avant le passage dans un nouveau rapport de transmission, le nouveau rapport de transmission est prédit sur la base d'hypothèses préalablement définies et/ou d'informations disponibles concernant les états du véhicule et **en ce que** les vitesses de rotation de l'arbre de sortie du moteur et la vitesse de rotation de l'arbre de sortie de la transmission ramenée à celle de l'entrée de la transmission sont synchronisées sur la base des hypothèses et/ou des informations.

9. Procédé selon l'une des revendications précédentes, **caractérisé en ce que** la commande de position (CP) calcule la position du train d'entraînement à un instant ultérieur à l'aide de la position détectée du train d'entraînement au début ou à la fin de passage au point mort par intégration des vitesses de rotation relatives de l'arbre de sortie (2) du moteur et de l'arbre de sortie (7) de la transmission.

10. Procédé selon la revendication 9, **caractérisé en ce que** la commande de position (CP) diminue en fonction de la position calculée la vitesse de rotation relative à la fin d'un passage par le point mort de telle sorte que soit obtenue une signature de choc souhaitée.
